(19) Europäisches Patentamt / European Patent Office / Office européen des brevets

(11) **EP 2 447 214 A2**

(12) **EUROPEAN PATENT APPLICATION**
published in accordance with Art. 153(4) EPC

(43) Date of publication:
**02.05.2012 Bulletin 2012/18**

(51) Int Cl.:
*C01G 45/00* (2006.01)    *H01M 4/505* (2010.01)
*H01M 4/36* (2006.01)

(21) Application number: **10748892.6**

(22) Date of filing: **21.06.2010**

(86) International application number:
**PCT/JP2010/060927**

(87) International publication number:
**WO 2010/101306 (10.09.2010 Gazette 2010/36)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.06.2009 JP 2009150415**
**29.09.2009 JP 2009225079**

(71) Applicant: **NGK Insulators, Ltd.**
**Nagoya-shi, Aichi 467-8530 (JP)**

(72) Inventors:
• **YURA, Yukinobu**
  **Nagoya-shi**
  **Aichi 467-8530 (JP)**
• **KOBAYASHI, Nobuyuki**
  **Nagoya-shi**
  **Aichi 467-8530 (JP)**
• **NANATAKI, Tsutomu**
  **Nagoya-shi**
  **Aichi 467-8530 (JP)**
• **KAIGAWA, Kazuyuki**
  **Nagoya-shi**
  **Aichi 467-8530 (JP)**

(74) Representative: **Paget, Hugh Charles Edward et al**
**Mewburn Ellis LLP**
**33 Gutter Lane**
**London**
**EC2V 8AS (GB)**

(54) **POSITIVE ELECTRODE ACTIVE MATERIAL AND LITHIUM SECONDARY BATTERY**

(57)    There is provided a positive electrode active material having a specific surface area of 0.1 to 0.5 $m^2/g$, which contains a large number of crystal grains containing primary particles of 5 to 20 $\mu m$ in particle diameter, composed of lithium manganate of spinel structure containing lithium and manganese as the constituent elements, and a bismuth compound containing bismuth. The proportion of the primary particles contained in the large number of crystal grains is 70 areal % or more and the proportion of the bismuth contained in the bismuth compound is 0.005 to 0.5 mol % relative to the manganese contained in the lithium manganate.

FIG.5A

**Description**

Technical Field

The present invention relates to a positive electrode active material and a lithium secondary battery. More particularly, the present invention relates to a positive electrode active material usable for production of a lithium secondary battery improved in cycle characteristics at high temperatures, and a lithium secondary battery improved in cycle characteristics at high temperatures.

Background Art

As the positive electrode active material of lithium secondary battery, there are known lithium cobaltate of layered rock salt structure, lithium nickelate of layered rock salt structure, lithium manganate of spinel structure, etc. Lithium cobaltate of layered rock salt structure is unstable in supply because the reserve of cobalt is small and the cobalt-producing regions are unevenly distributed. Also, lithium nickelate of layered rock salt structure has a problem of unstable structure under charging condition.

Lithium manganate of spinel structure, as compared with lithium cobaltate of layered rock salt structure and lithium nickelate of layered rock salt structure, is known to be high in safety as well as rate characteristics and low in cost. The lithium manganate of spinel structure, however, generally has problems of deterioration in properties at high temperatures such as reduction in cycle characteristics at high temperatures, deterioration in storage property at high temperatures, and the like. In order to improve the cycle characteristics at high temperatures, there is disclosed a positive electrode active material for lithium secondary battery, characterized by being composed of a mixture of a chalcogen compound of at least one element selected from the element group consisting of Ge, Sn, Pb, In, Sb, Bi and Zn and a Li-Mn-based composite oxide (see, for example, Patent Document 1).

In order to achieve a superior filling property, a high initial capacity and a high capacity maintenance factor, is also disclosed a positive electrode active material for lithium secondary cells mainly containing an Li-Mn composite oxide particles having a spinel structure wherein the average of the porosity of the particles represented by a particular expression is 15% or less (see, for example, Patent Document 2). In Patent Document 2, it is disclosed that, in the positive electrode active material for lithium secondary cells, the average particle diameter of primary particles is restricted preferably at 3 $\mu$m or less in order to maintain the average of the porosity of the particles at 15% or less.

Prior Art Document

Patent Document

Patent Document 1: JP-A-10-302767
Patent Document 2: WO 2001/004975 pamphlet

Summary of the Invention

In conventional positive electrode active materials for lithium secondary battery using lithium manganate, the cycle characteristics at high temperatures when used in lithium secondary battery is not sufficient, and further improvement therefor is required.

The present invention has been made in view of the above-mentioned problem of the prior art. The present invention has an object of providing a positive electrode active material which is usable for production of a lithium secondary battery improved in cycle characteristics at high temperatures.

The present inventors made an extensive study in order to achieve the above object. As a result, it was found that the above object could be achieved by allowing a positive electrode active material to contain a large number of crystal grains which contain primary particles of particle diameters specified in a given numerical range and a bismuth compound, and further to have a specific surface area controlled in a particular numerical range. The finding has led to the completion of the present invention.

The present invention provides a positive electrode active material and a lithium secondary battery, both shown below.

[1] A positive electrode active material having a specific surface area of 0.1 to 0.5 $m^2$/g, which contains a large number of crystal grains containing primary particles of 5 to 20 $\mu$m in particle diameter, composed of lithium manganate of spinel structure containing lithium and manganese as the constituent elements, and a bismuth compound containing bismuth, wherein the proportion of the primary particles contained in the large number of crystal grains is 70 areal % or more and the proportion of the bismuth contained in the bismuth compound is 0.005 to 0.5 mol % relative to the manganese contained in the lithium manganate.

[2] The positive electrode active material according to [1], wherein the value of a lattice strain ($\eta$) in powder X-ray diffraction pattern is $0.7 \times 10^{-3}$ or less.

[3] The positive electrode active material according to [1] or [2], wherein the bismuth compound is a compound of bismuth and manganese.

[4] The positive electrode active material according to [3], wherein the compound of bismuth and manganese is $Bi_2Mn_4O_{10}$.

[5] The positive electrode active material according to any one of [1] to [4], wherein the large number of crystal grains contain single particles by 40 areal % or more.

[6] The positive electrode active material according to any one of [1] to [5], wherein the large number of crystal grains further contain secondary particles formed by mutual connection of a plurality of the primary particles.

[7] The positive electrode active material according to any one of [1] to [6], wherein the bismuth compound is present on at least either of the surfaces of the primary particles or the particle boundary parts where a plurality of the primary particles are connected to each other.

[8] A lithium secondary battery which has an electrode body comprising a positive electrode containing a positive electrode active material according to any one of [1] to [7] and a negative electrode containing a negative electrode active material.

The positive electrode active material of the present invention is usable for production of a lithium secondary battery improved in cycle characteristics at high temperatures.

The lithium secondary battery of the present invention is improved in cycle characteristics at high temperatures.

Brief Description of the Drawings

[Fig. 1] Fig. 1 is a perspective view showing an example of the state in which a plurality of primary particles are connected to each other.

[Fig. 2] Fig. 2 is a perspective view showing another example of the state in which a plurality of primary particles are connected to each other.

[Fig. 3] Fig. 3 is a sectional view showing an embodiment of the lithium secondary battery of the present invention.

[Fig. 4] Fig. 4 is a schematic view showing an example of the electrode body constituting another embodiment of the lithium secondary battery of the present invention.

[Fig. 5A] Fig. 5A is an electron micrograph showing an embodiment of a large number of crystal grains according to the positive electrode active material of the present invention.

[Fig. 5B] Fig. 5B is an electron micrograph showing another embodiment of a large number of crystal grains according to the positive electrode active material of the present invention.

[Fig. 5C] Fig. 5C is an electron micrograph showing still another embodiment of a large number of crystal grains according to the positive electrode active material of the present invention.

[Fig. 5D] Fig. 5D is an electron micrograph showing still another embodiment of a large number of crystal grains according to the positive electrode active material of the present invention.

[Fig. 6A] Fig. 6A is a schematic view showing a state in which crystal grains adhere to each other in a cross-section of the positive electrode active material of the present invention.

[Fig. 6B] Fig. 6B is a schematic view showing a state in which crystal grains adhere to each other in a cross-section of the positive electrode active material of the present invention.

[Fig. 6C] Fig. 6C is a schematic view showing a state in which crystal grains adhere to each other in a cross-section of the positive electrode active material of the present invention.

[Fig. 6D] Fig. 6D is a schematic view showing a state in which crystal grains adhere to each other in a section of the positive electrode active material of the present invention.

Mode for Carrying out the Invention

The embodiment of the present invention is described below. However, the present invention is in no way restricted to the following embodiment. It should be construed that appropriate changes, improvements, etc. can be added to the following embodiment based on the ordinary knowledge possessed by those skilled in the art as long as there is no deviation from the gist of the present invention and that the resulting embodiments as well fall in the scope of the present invention.

I. Positive electrode active material

The positive electrode active material of the present invention contains a large number of crystal grains which contain primary particles of 5 to 20 $\mu$m in particle diameter, composed of lithium manganate of spinel structure containing lithium and manganese as the constituent elements and a bismuth compound, and the specific surface area of the positive electrode active material is 0.1 to 0.5 m$^2$/g.

1. Primary particles

The primary particles are particles of 5 to 20 $\mu$m in particle diameter, composed of lithium manganate of spinel structure containing lithium and manganese as the constituent elements.

The chemical formula of lithium manganate is ordinarily represented by $LiMn_2O_4$. In the positive electrode active material of the present invention, however, there can be used, in addition to lithium manganate of the above chemical formula, lithium manganate represented by, for example, the following general formula (1) as long as it has a spinel structure.

$$LiM_xMn_{2-x}O_4 \qquad (1)$$

In the general formula (1), M is at least one kind of element (substituting element) selected from the group consisting of Li, Fe, Ni, Mg, Zn, Al, Co, Cr, Si, Sn, P, V, Sb, Nb, Ta, Mo and W. The substituting element may further include Ti, Zr and Ce, in addition to the above-mentioned at least one kind of element. X is the substituting number of the substituting element M. Li becomes + mono-valent ion; Fe, Mn, Ni, Mg and Zn each become + bi-valent ion; B, Al, Co and Cr each become + tri-valent ion; Si, Ti, Sn, Zr and Ce each become + tetra-valent ion; P, V, Sb, Nb and Ta each become + penta-valent ion; Mo and W each become + hexa-valent ion; and all these elements are present theoretically in $LiMn_2O_4$ in the form of solid solution. Incidentally, Co and Sn may take + bi-valency; Fe, Sb and Ti may take + tri-valency; Mn may take + tri- and + tetra-valencies; and Cr may take + tetra- and + hexa-valencies. Therefore, the substituting element M may be present in a state of mixed valencies. The number of oxygen atoms need not be absolutely 4 and may be excessive or insufficient as long as the required crystal structure can be secured.

The crystal grains may be particles composed of lithium manganate (e.g. $LiNi_{0.5}Mn_{1.5}O_4$) in which 25 to 55 mol % of the total Mn is substituted by Ni, Co, Fe, Cu, Cr or the like. The positive electrode active material obtained by using such a lithium manganate allows production of a lithium secondary battery which is superior in high-temperature cycle characteristics as well as in rate characteristics and which further can have a high charge-discharge potential and a high energy density. Therefore, it allows production of a lithium secondary battery having an electromotive force of 5 V level.

The particle diameters of the primary particles are 5 to 20 $\mu$m, preferably 7 to 20 $\mu$m, more preferably 10 to 20 $\mu$m. When the particle diameters of the primary particles are not within this range, there may be a reduction in cycle characteristics. The reason therefor is uncertain but is considered to be as follows. That is, when the particle diameters are smaller than 5 $\mu$m, Mn ion dissolves into electrolytic solution easily; meanwhile, when the particle diameters are larger than 20 $\mu$m, cracks appear easily in the particles owing to the stress caused by the volume change of particles during charge-discharge, which incurs an increase in internal resistance.

Incidentally, the particle diameters are a value specified as follows. First, a positive electrode active material powder is placed on a carbon tape so that there is no piling of particles; Au is sputtered thereon in a thickness of about 10 nm using an ion sputtering apparatus (JFC-1500 (trade name), a product of JEOL Ltd.) ; then, a secondary electron image of particles is taken, using a scanning electron microscope (JSM-6390 (trade name), a product of JEOL Ltd.), by selecting such a display magnification that 20 to 50 primary particles each having the maximum diameter of 5 $\mu$m or larger are seen in the visual field. For each primary particle in the image obtained, there is calculated an average of the maximum diameter of the particle part not hidden by other particles and the largest diameter of the diameters at right angles to the above maximum diameter, and the average is taken as the particle diameter ($\mu$m) of the primary particle. In this way, particles diameters are measured for all primary particles excluding the particles which are hidden by other particles and are uncalculable.

The proportion of the primary particles of 5 to 20 $\mu$m in particle diameter is 70 areal % or more, preferably 80 areal % or more, more preferably 90 areal % or more, relative to the area (100 areal %) occupied by all the crystal grains whose particle diameters are measurable as mentioned above. Incidentally, the proportion of the primary particles of 5 to 20 $\mu$m in particle diameter can be calculated, for example, by measuring the area (A) occupied by all the crystal grains whose particle diameters are measurable and the area (a) occupied by the primary particles of 5 to 20 $\mu$m in particle diameter, using an image edit software ("Photoshop" (trade name), a product of Adobe Systems Incorporated) and substituting them into an expression (a/A)x100.

2. Bismuth compound

The proportion of bismuth contained in the bismuth compound is 0.005 to 0.5 mol %, preferably 0.01 to 0.2 mol %, more preferably 0.01 to 0.1 mol %, relative to the manganese contained in the lithium manganate. When the proportion is smaller than 0.005 mol %, there may be a reduction in cycle characteristics at high temperatures. Meanwhile, when the proportion is larger than 0.5 mol %, there may be a reduction in initial capacity. Incidentally, the proportion of bismuth can be obtained by quantitatively determining lithium, manganese and bismuth using an ICP (inductively coupled plasma) optical emission spectrometer ("ULTIMA 2" (trade name), a product of HORIBA, Ltd.) and making calculation using the results of the determination.

The bismuth compound includes, for example, bismuth oxide and a compound of bismuth and manganese. The bismuth compound is preferably a compound of bismuth and manganese. As the compound of bismuth and manganese, there can be specifically mentioned compounds represented by chemical formulas of $Bi_2Mn_4O_{10}$ and $Bi_{12}MnO_{20}$. Of these, a compound represented by a chemical formula of $Bi_2Mn_4O_{10}$ is preferred particularly. Incidentally, the bismuth compound can be identified by X-ray diffraction measurement (hereinafter, this is referred to also as "XRD MEASUREMENT") or by electron probe microanalysis (hereinafter, this is referred to also as "EPMA MEASUREMENT").

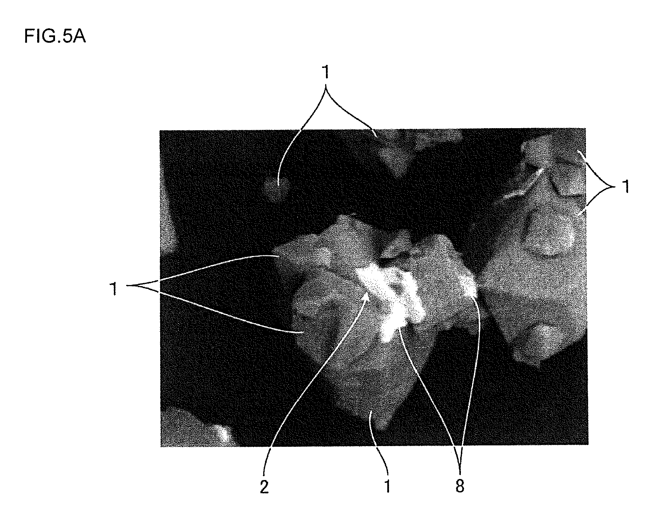

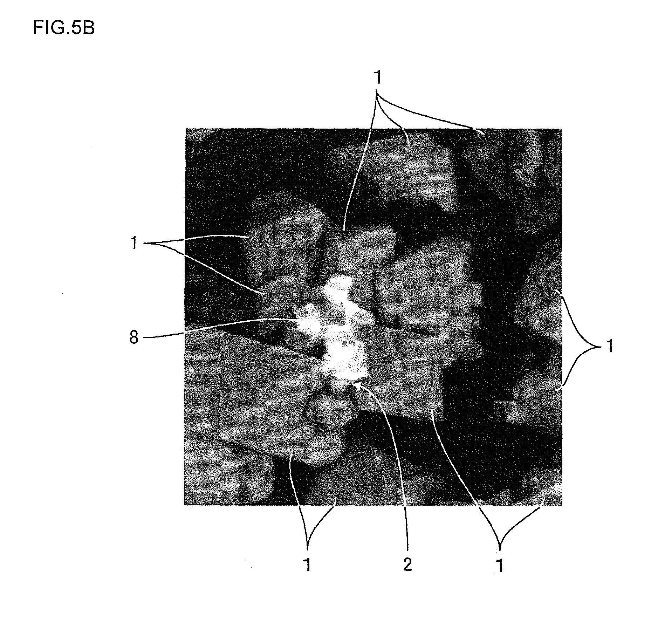

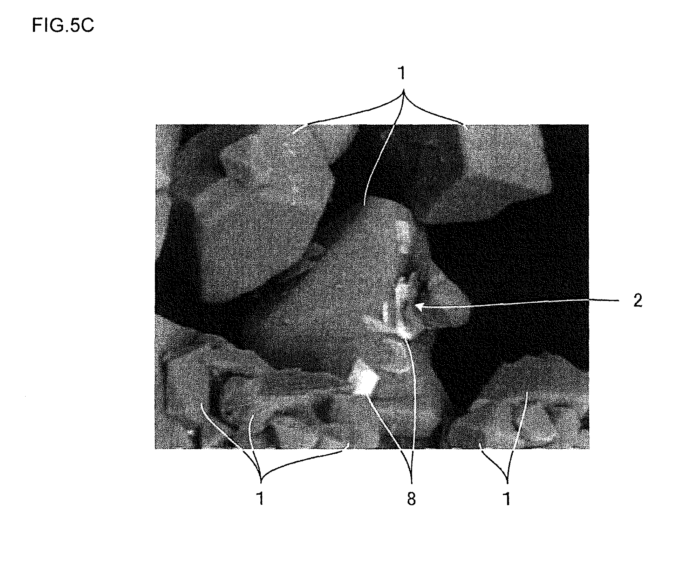

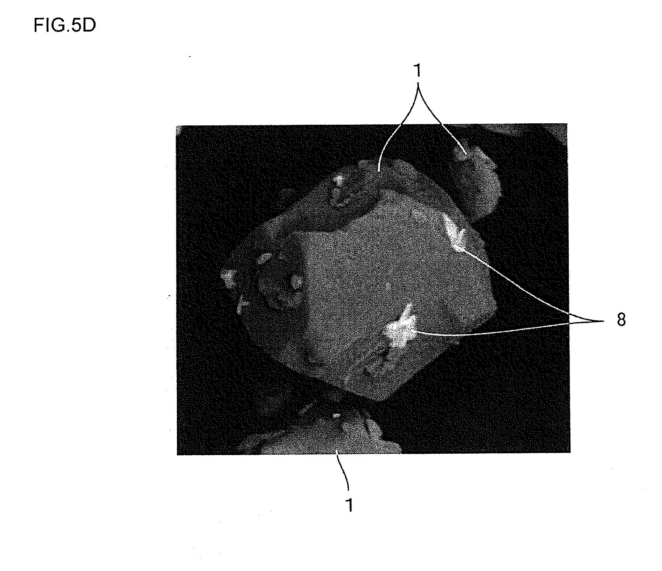

Fig. 5A to Fig. 5D are each an electron micrograph showing an embodiment of a large number of crystal grains according to the positive electrode active material of the present invention. It is presumed that the bismuth compound, particularly the compound of bismuth and manganese suppresses the dissolution of Mn from the surface of each primary particle or from the particle boundary parts of a plurality of primary particles connected to each other to improve cycle characteristics effectively. Therefore, it is preferred that, as shown in Fig. 5A to Fig. 5D, the bismuth compound 8 is present either on the surface of each primary particle or on the particle boundary parts 2 of a plurality of primary particles 1 connected to each other. Incidentally, the presence of the bismuth compound can be confirmed, for example, by using an electron microscope ("JSM-6390" (trade name), a product of JEOL Ltd.).

3. Single particles

The large number of crystal grains contained in the positive electrode active material of the present invention preferably contain single particles by 40 areal % or more. That is, the proportion of the single particles contained in the large number of crystal grains is preferably 40 areal % or more. When the proportion of the single crystals is less than 40 areal %, the amount of secondary particles such as polycrystal particles, agglomerated particles and the like is relatively large; thereby, the diffusion of Li ion is hindered at the particle boundary parts of secondary particles, which may cause a reduction in rate characteristics. Incidentally, in the present specification, "single particle" refers to a crystal grain present independently, of the crystal grains contained in the large number of crystal grains; that is, a crystal grain not forming a polycrystalline particle or an agglomerated particle.

The proportion (areal %) of the single particles contained in the large number of crystal grains can be determined by the following method. A positive electrode active material is mixed with a conductive resin ("Technovit 5000" (trade name), a product of Heraeus Kulzer GmbH), followed by curing. Then, the cured material is subjected to mechanical grinding and then ion-polished using a cross section polisher ("SM-09010" (trade name), a product of JEOL Ltd.). The backscattered electron image of the ion-polished material of the cross section of the positive electrode active material is observed, using a scanning electron microscope ("ULTRA 55" (trade name), a product of Carl Zeiss, Inc.).

In the backscattered electron image, the contrast differs owing to channeling effect when the direction of crystal differs. Therefore, when a grain boundary part is present in the crystal grain being observed, the grain boundary part becomes clear or unclear by slightly changing the direction of observation of sample (the inclination of sample). Utilizing this phenomenon, the presence of grain boundary part can be confirmed; thereby, there can be identified whether or not a crystal grain is a single particle, or a polycrystal particle formed by connection of primary particles of different crystallographic orientations or an agglomerated particle.

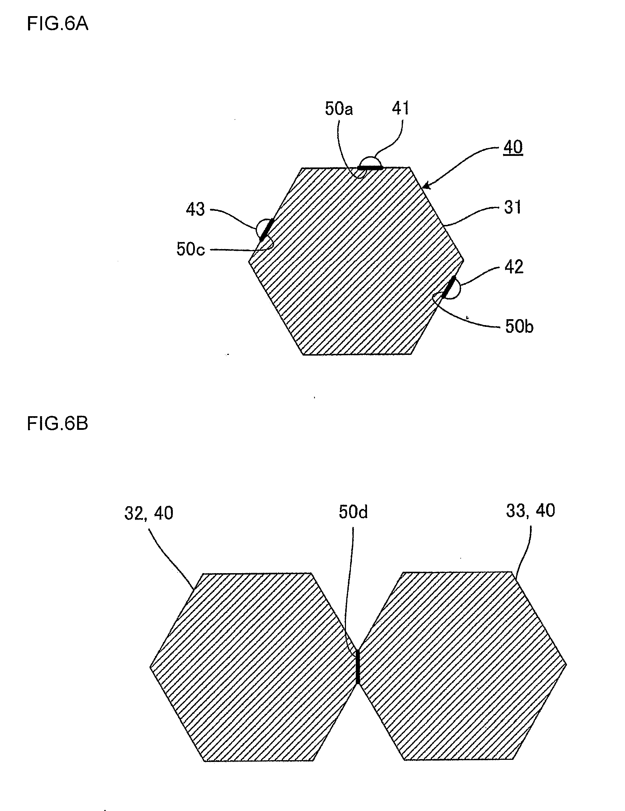

There is a case in which microparticles (crystal grains) significantly smaller in diameter (e.g. about 0.1 to 1 $\mu$m) than the particle diameter of single particle adhere onto the surface of a crystal grain (see Fig. 6A). Also, there is a case in which polycrystal particles or agglomerated particles adhere onto each other at a small part (see Fig. 6B). In such cases, the parts (adhesion parts 50a to 50c in Fig. 6A) at which microparticles 41 to 43 adhere onto the surface of a crystal grain 31, and the part (adhesion part 50d in Fig. 6B) at which crystal grains 32 and 33 are in contact with each other, are slight; therefore, there is no influence on rate characteristics and durability. Accordingly, such crystal grains can be regarded substantially as single particle. Specifically explaining, when the length of adhesion part (the total of all adhesion parts when there are a plurality of adhesion parts) of a crystal grain is 1/5 or smaller relative to the circumference of the crystal grain estimated from the backscattered electron image by using an image edit software ("Image-Pro" (trade name), a product of Media Cybernetics, Inc.), the crystal grain is regarded as single particle and is calculated.

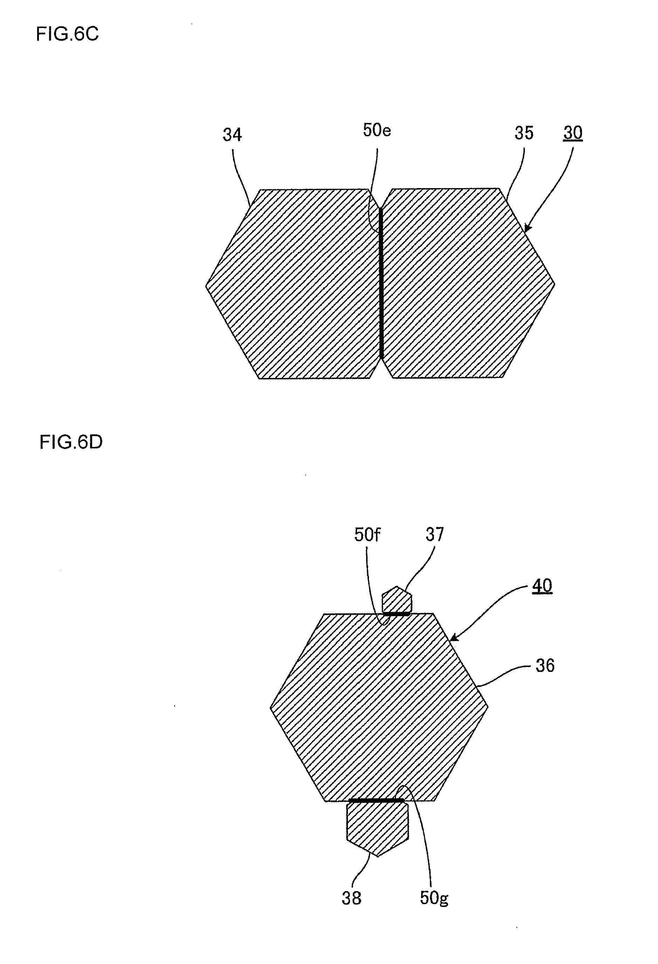

Fig. 6A to Fig. 6D are each a schematic drawing showing a state in which crystal grains adhere to each other, in the section of the positive electrode active material of the present invention. For example, Fig. 6A is a case in which three microparticles 41 to 43 adhere onto the surface of a crystal grain 31 and the total of the lengths of adhesion parts 50a to 50c is 1/5 or smaller relative to the circumference of the crystal grain 31. In this case, the crystal grain 31 is regarded as single particle. Meanwhile, any of the microparticles 41 to 43 is not regarded as single particle because the length of each adhesion part is 1/5 or larger relative to the circumference of each fine particle. Fig. 6B is a case in which crystal grains 32 and 33 adhere to each other and the length of adhesion part 50d is 1/5 or smaller relative to the circumference of the crystal grain 32 or 33. In this case, the crystal grains 32 and 33 are each regarded as single particle. Fig. 6C is a case in which crystal grains 34 and 35 adhere to each other and the length of adhesion part 50e is 1/5 or larger relative to the circumference of the crystal grain 34 or 35. In this case, any of the crystal grains 34 and 35 is not regarded as single particle. Fig. 6D is a case in which two small crystal grains 37 and 38 (not microparticles) adhere onto the surface of a crystal grain 36 and the total of the lengths of adhesion parts 50f and 50g is 1/5 or smaller relative to the length of the circumference of the crystal grain 36. In this case, the crystal grain 36 is regarded as single particle. Meanwhile, any of the crystal grains 37 and 38 is not regarded as single particle because the length of each adhesion part is 1/5 or larger relative to the circumference of the crystal grain 37 or 38.

In this way, there is judged whether or not each crystal grain is a single particle. The proportion (areal %) of single particles can be calculated by measuring the area (B) occupied by all crystal grains whose areas can be measured from the backscattered electron image and the area (b) occupied by all single particles by using the above-mentioned image edit software and substituting them into an expression (b/B)x100.

4. Secondary particles

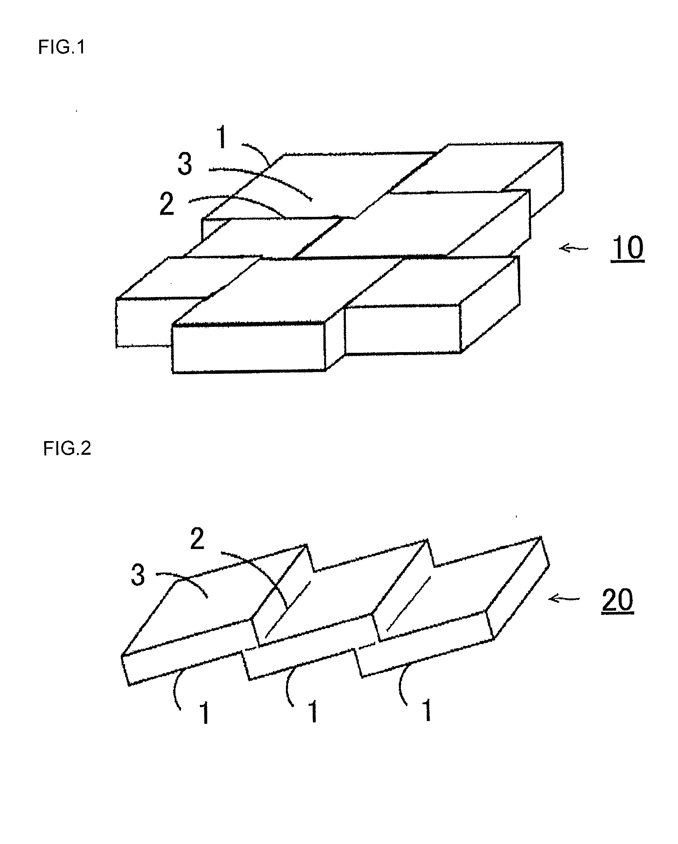

Preferably, the large number of crystal grains contain secondary particles formed by mutual connection of a plurality of primary particles. Each secondary particle is formed by mutual connection of a plurality of primary particles. Figs. 1 and 2 are each a perspective view showing an example of the state in which a plurality of primary particles are connected to each other. As shown in Fig. 1, in a secondary particle 10, a plurality of primary particles 1 are connected to each other at their boundary parts 2. In Fig. 1, a plurality of primary particles 1 are connected to each other so that one crystal face 3 of each primary particle is on one same plane. Incidentally, the secondary particles are not restricted to those formed by the above connection and may be, for example, those formed by such mutual connection that a plurality of primary particles 1 are piled up in such a manner that one crystal face 3 of each primary particle 1 is directed to one same direction, as shown in Fig. 2. Of these secondary particles, preferred are those formed by in-plane connection of a plurality of primary particles 1, such as shown in Fig. 1, because such connection provides the following advantages. That is, in the Fig. 1 connection, there is no particle boundary part (which inhibits the diffusion of Li) in the thickness direction of each primary particle 1; therefore, there can be maintained about the same charge-discharge property as when there is used a positive electrode active material containing a large number of single particles free from secondary particles; meanwhile, there is obtained a smaller specific surface area than in the large number of single particles free from secondary particles, resulting in the higher durability (higher cycle characteristics) of positive electrode active material.

When the secondary particles are formed by in-plane connection of primary particles, it is preferable that 2 to 20 primary particles of 5 to 20 $\mu$m in particle diameter are connected. When the number of connection of primary particles is larger than 20, the secondary particles has a flat shape of large aspect ratio; when filling is made so that the flat face is parallel to the surface of positive electrode plate, the diffusion path of Li ion into the thickness direction of positive electrode plate becomes long and a reduction in rate characteristics is incurred, which is not preferred.

(Production method)

As to the production method of the positive electrode active material of the present invention, there is no particular restriction, and there is the following method, for example. First, there is prepared a mixed powder containing a lithium compound, a manganese compound and a bismuth compound (e.g. bismuth oxide). Incidentally, as the manganese compound and the bismuth compound, there may be used a compound of manganese and bismuth (e.g. $Bi_2Mn_4O_{10}$). Also, it is possible to add a bismuth compound to lithium manganate (e.g. $LiMn_2O_4$). The mixed powder may further contain, for promotion of grain growth, a seed crystal composed of lithium manganate of spinel structure as a nucleus of grain growth. Further, a seed crystal and a bismuth compound may be added. In this case, the bismuth compound may be added in a state that it is adhered to the seed crystal.

As the lithium compound, there can be mentioned, for example, $Li_2CO_3$, $LiNO_3$, $LiOH$, $Li_2O_2$, $Li_2O$ and $CH_3COOLi$. As the manganese compound, there can be mentioned, for example, $MnO_2$, $MnO$, $Mn_2O_3$, $Man_3O_4$, $MnCO_3$ and $MnOOH$. When Mn is substituted by a substituting element other than Li, the mixed powder may contain an aluminum compound, a magnesium compound, a nickel compound, a cobalt compound, a titanium compound, a zirconium compound, a cerium compound, etc. As the aluminum compound, there can be mentioned, for example, $\alpha$-$Al_2O_3$, $\gamma$-$Al_2O_3$, $AlOOH$ and $Al(OH)_3$. As the magnesium compound, there can be mentioned, for example, $MgO$, $Mg(OH)_2$ and $MgCO_3$.

As the nickel compound, there can be mentioned, for example, NiO, $Ni(OH)_2$, and $NiNO_3$. As the cobalt compound, there can be mentioned, for example, $Co_3O_4$, CoO and $Co(OH)_3$. As the titanium compound, there can be mentioned, for example, TiO, $TiO_2$ and $Ti_2O_3$. As the zirconium compound, there can be mentioned, for example, $ZrO_2$, $Zr(OH)_4$ and $ZrO(NO_3)_2$. As the cerium compound, there can be mentioned, for example, $CeO_2$, $Ce(OH)_4$ and $Ce(NO_3)_3$.

The mixed powder may be ground as necessary. The particle diameter of the mixed powder is preferably 10 $\mu$m or smaller. When the particle diameter of the mixed powder is larger than 10 $\mu$m, the mixed powder may be subjected to dry or wet grinding to make the particle diameter 10 $\mu$m or smaller. There is no particular restriction as to the method for grinding, and the grinding can be conducted using, for example, a pot mill, a beads mill, a hammer mill or a jet mill.

Next, the mixed powder prepared is formed into a formed body. There is no particular restriction as to the shape of the formed body, and there can be mentioned, for example, a sheet shape, a granular shape, a hollow-granule shape, a flake shape, a honeycomb shape, a bar shape and a roll shape (a wound shape). In order to more effectively obtain primary particles of 5 to 20 $\mu$m in diameter, the formed body can be produced as, for example, a sheet-shaped formed body of 10 to 30 $\mu$m in thickness, a hollow-granular-shaped formed body having a shell thickness of 10 to 30 $\mu$m, a grain-shaped formed body of 10 to 30 $\mu$m in diameter, a flake-shaped formed body of 10 to 30 $\mu$m in thickness and 50 $\mu$m to 10 mm in size, a honeycomb-shaped formed body of 10 to 30 $\mu$m in partition wall thickness, a roll-shaped (wound) formed body of 10 to 30 $\mu$m in thickness, and a bar-shaped formed body of 10 to 30 $\mu$m in diameter. Of these, a sheet-shaped formed body of 10 to 30 $\mu$m in thickness is preferred.

The method for forming a sheet-shaped or flake-shaped formed body is not particularly restricted and the forming can be conducted, for example, by a doctor blade method, by a drum drier method in which a slurry of a mixed powder is coated on a hot drum and dried and then the dried material is scraped off using a scraper, by a disc drier method in which a slurry of a mixed powder is coated on a hot disc and dried and then the dried material is scraped off using a scraper, or by an extrusion method in which a clay containing a mixed powder is extruded through a die with slits. Of these forming methods, there is preferred a doctor blade method capable of forming a uniform sheet-shaped formed body. The density of the shaped formed body obtained by the above forming method may be increased by pressing using a roller or the like. A hollow-granular formed body can be produced by appropriately setting the conditions of spray dryer. As the method for producing a grain-shaped formed body (a bulk shaped formed body) of 10 to 30 $\mu$m in diameter, there can be mentioned, for example, a spray dry method, a method of pressing a mixed powder by a roller or the like, and a method of cutting an extrudate which is a bar-shaped or sheet-shaped formed body. As the method for producing a honeycomb-shaped or bar-shaped formed body, there can be mentioned, for example, an extrusion method. Also, as the method for producing a roll-shaped formed body, there can be mentioned, for example, a drum dryer method.

Then, the formed body obtained is fired to obtain a sintered body. There is no particular restriction as to the method for firing. The firing of the sheet-shaped formed body is preferably conducted by placing each sheet on a setter one by one so as to minimize the piling-up of sheets, or by placing crumpled sheets in a cover-opened sagger.

Incidentally, the mixed powder per se may be fired. In this case, in order to obtain good contact of the mixed powder with the atmosphere during firing, it is preferred that the mixed powder is fired, for example, by making the deposited height of the mixed powder in a crucible or a sagger to make large the contact area of the mixed powder with the atmosphere. It is also preferred that the mixed powder is fired while stirring using a rotary kiln or the like. Incidentally, a sintered body (whose shape is plate-like, spherical or the like) of a getter material (e.g. zirconia) capable of absorbing bismuth is placed in the mixed powder as necessary.

The firing is conducted preferably in a state that the vaporization of bismuth is promoted so that the proportion of bismuth contained in bismuth compound becomes 0.005 to 0.5 mol % relative to the manganese contained in lithium manganate. The firing temperature is preferably 830 to 1, 050˚C. When the firing temperature is lower than 830˚C, the grain growth of primary particles may be insufficient. Meanwhile, when the firing temperature is higher than 1,050˚C, there is a case that lithium manganate releases oxygen and is decomposed into lithium manganate of layered rock salt structure and manganese oxide. The atmosphere of the firing may be an atmosphere of high oxygen partial pressure. In this case, the oxygen partial pressure is preferably, for example, 50% or higher relative to the pressure of the firing atmosphere. Thereby, the release of oxygen from lithium manganate becomes difficult and the decomposition thereof becomes difficult.

It is presumed that the presence of bismuth compound and above-mentioned seed crystal in firing is effective for the promotion of grain growth of primary particles even at a relatively low temperature (about 900˚C), resulting in a small specific surface area and high crystallinity. By thus conducting the firing, there can be prepared a polycrystal composed of primary particles having relatively large particle diameters and high crystallinity. Incidentally, in firing a sheet-shaped formed body, by growing particles sufficiently until the particles become singleness in the thickness direction of sheet, the particle diameters are restricted at about the thickness of sheet, and there can be prepared a sheet-shaped sintered body in which primary particles uniform in particle diameters are connected to each other in a plane.

By conducting the firing with a controlled temperature elevation rate, the particle diameter of primary particles after firing can be uniformized. In this case, the temperature elevation rate may be, for example, 50 to 500˚C per hour.

Also, by keeping the atmospheric temperature in a low temperature range and then conducting the firing at the firing temperature, it is possible to grow primary particles uniformly. In this case, the low temperature range may be 400 to 800˚C when the formed body is fired, for example, at 900˚C. The uniform growth of primary particles is also possible by forming crystal nuclei at a temperature higher than the firing temperature and then conducting the firing at a firing temperature. In this case, the temperature higher than the firing temperature may be 1, 000˚C, for example, when the firing temperature of the firing material is 900˚C.

The firing can also be conducted in two stages. For example, a mixed powder of manganese oxide and alumina is formed into a sheet shape, the formed body is fired, a lithium compound is added thereto, and firing is conducted again, whereby lithium manganate can be produced. Also, lithium manganate crystal of high lithium content is produced, then manganese oxide or alumina is added, and firing is conducted again, whereby lithiummanganate can be produced.

Then, the polycrystal or sintered body obtained is subjected to wet or dry grinding, to grind primary particles to such an extent that particles boundary parts break away with no breakage of primary particles, and/or is subjected to classification, whereby crystal grains having intended particle diameters and an intended proportion of single particles can be obtained. As the method for grinding, there is no particular restriction. There can be mentioned, for example, a method of disintegrating the sintered body by pressing it against a mesh or a screen of 10 to 100 $\mu$m in opening diameter, and a method of using a pot mill, a beads mill, a hammer mill, a jet mill the like. As to the method for classification, there is no particular restriction. There can be mentioned, for example, a method of conducting sieving using a mesh of 5 to 100 $\mu$m in opening diameter, a method by water elutriation, and a method of using an air classifier, a sieve classifier, an elbow jet classifier or the like.

By re-heating the obtained crystal grains having intended particle diameters and an intended proportion of single particles at a temperature lower than the above-mentioned firing temperature, oxygen defect is cured, the distortion of crystallinity taking place during the grinding is recovered, and there can be produced a positive electrode active material containing a large number of crystal grains containing secondary particles formed by mutual connection of a plurality of single particles or primary particles. The re-heating can be conducted also by maintaining at a given temperature for a given period of time, prior to the grinding, that is, during the temperature lowering of the first firing, and this re-heating as well is effective for the curing of oxygen defect. When the re-heating is conducted after the grinding (or after the classification), the powder after re-heating may be subjected again to grinding and classification. The grinding and the classification can be conducted by the above-mentioned methods, etc.

A positive electrode active material of the present invention can be produced by the above-mentioned production method. According to the above-mentioned production method, there can be obtained a positive electrode active material having a specific surface area of 0.1 to 0.5 m$^2$/g, which contains a large number of crystal grains containing primary particles of 5 to 20 $\mu$m in particle diameter, composed of lithium manganate of spinel structure containing lithium and manganese as the constituent elements, and a bismuth compound containing bismuth, wherein the proportion of the primary particles contained in the large number of crystal grains is 70 areal % or more and the proportion of the bismuth contained in the bismuth compound is 0.005 to 0.5 mol % relative to the manganese contained in the lithium manganate.

(Physical properties)

The specific surface area of the positive electrode active material is 0.1 to 0.5 m$^2$/g, preferably 0.15 to 0.4 m$^2$/g, more preferably 0.2 to 0.35 m$^2$/g. When the specific surface area of the positive electrode active material is not within this range, there may be a reduction in cycle characteristics. Incidentally, the specific surface area can be measured using "Flowsorb III 2305" (trade name) (a product of Shimadzu Corporation) , by using nitrogen as an adsorption gas.

The value of a lattice strain ($\eta$) in powder X-ray diffraction pattern of the positive electrode active material is preferably 0.7x10$^{-3}$ or less, more preferably 0.5x10$^{-3}$ or less, particularly preferably 0.3x10$^{-3}$ or less. When the value of the lattice strain ($\eta$) is not within this range, there may be a reduction in rate characteristics. Incidentally, the value of the lattice strain ($\eta$) can be calculated using the following numerical expression (2).

$$\beta \cos \theta = \lambda / D + 2 \eta \sin \theta \qquad (2)$$

(In the expression (2), $\beta$ indicates an integrated full width at half maximum (rad) ; $\theta$ indicates a diffraction angle (˚); $\lambda$ indicates a wavelength (Å) of X-ray; and D indicates a crystallite size (Å).)

More specifically, the value of the lattice strain ( $\eta$ ) can be calculated by analyzing the diffraction image of powder X-ray diffraction pattern using an analytical software "TOPAS", according to the WPPD (Whole Powder Pattern Decomposition) method. Incidentally, the powder X-ray diffraction pattern can be measured using, for example, "D8 ADVANCE" (a product of Bruker AXS Ltd.).

II. Lithium secondary battery

The lithium secondary battery of the present invention has an electrode body which comprises a positive electrode containing the positive electrode active material described in "I. Positive electrode active material" and a negative electrode containing a negative electrode active material. The lithium secondary battery of the present invention is superior in cycle characteristics at high temperatures. Such a characteristics appears strikingly particularly in large-capacity secondary batteries produced using a large amount of an electrode active material. Therefore, the lithium secondary battery of the present invention can be used preferably, for example, as a motor driven electric source of electric vehicle or hybrid electric vehicle. However, the lithium secondary battery of the present invention can also be used preferably as a small-capacity cell (e.g. coin cell).

The positive electrode can be obtained, for example, by mixing a positive electrode active material with acetylene black (a conductive agent), polyvinylidene fluoride (PVDF) (a binder), polytetrafluoroethylene (PTFE), etc. at given proportions to prepare a positive electrode material and coating the positive electrode material on the surface of metal foil or the like. As the positive electrode active material, there may be used lithium manganate of spinel structure alone, or a mixture thereof with a different active material (e.g. lithium nickelate, lithium cobaltate, lithium cobalt-nickel-manganate (so-called ternary system), or lithium iron phosphate). Lithium nickelate consumes the hydrofluoric acid which generates in the electrolytic solution of battery and which causes the dissolution of manganese (the dissolution is the main cause of durability deterioration of lithium manganate), and suppresses the dissolution of manganese effectively.

As the materials (other than the positive electrode active material) required as the components of the lithium secondary battery of the present invention, there can be used various known materials. As the negative electrode active material, there can be used, for example, an amorphous carbonaceous material (e.g. soft carbon or hard carbon), highly graphitized carbon material (e.g. artificial graphite or natural graphite) and acetylene black. Of these, a highly graphitized carbon material (which is high in lithium capacity) is used preferably. Using such a negative electrode active material, a negative electrode material is prepared; the negative electrode material is coated on a metal foil or the like; thereby, a negative electrode is obtained.

As the organic solvent used in the non-aqueous electrolytic solution, there can be preferably used a carbonic acid ester type solvent (e.g. ethylene carbonate (EC), diethyl carbonate (DEC), dimethyl carbonate (DMC) or propylene carbonate (PC)), a single solvent (e.g. $\gamma$-butyrolactone, tetrahydrofuran, acetonitrile or the like), or a mixed solvent thereof.

As specific examples of the electrolyte, there can be mentioned a lithium complex fluoride compound (e.g. lithium phosphate hexafluoride ($LiPF_6$) or lithium borofluoride ($LiBF_4$) and a lithium halide (e.g. lithium perchlorate ($LiClO_4$)). Ordinarily, at least one kind of such electrolyte is used by being dissolved in the above-mentioned organic solvent. Of these electrolytes, $LiPF_6$ is used preferably because it hardly causes oxidative decomposition and gives a high conductivity in non-aqueous electrolytic.

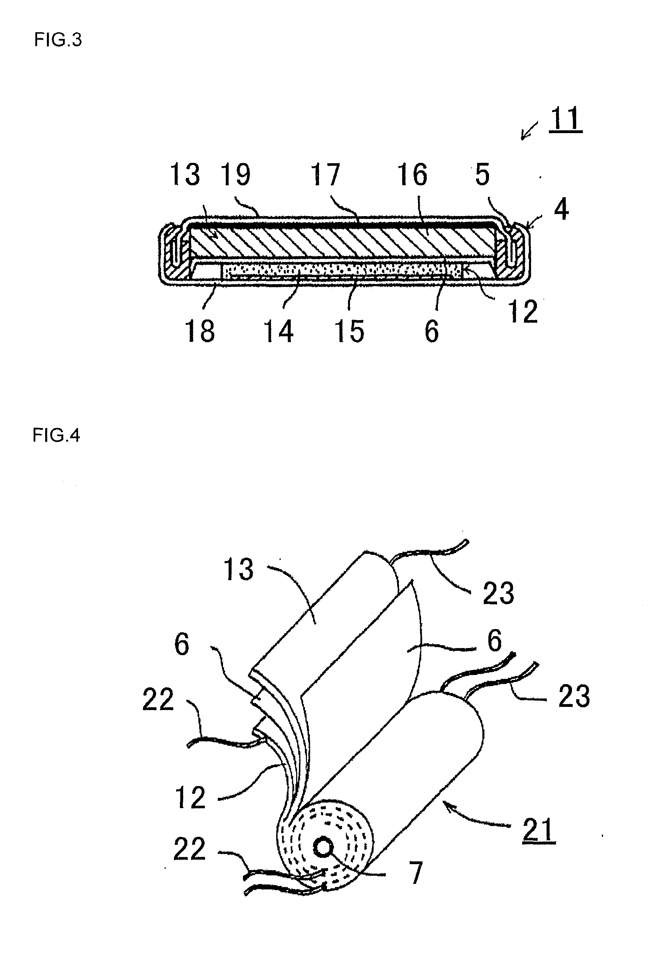

As specific examples of the battery structure, there can be mentioned a coin cell type lithium secondary battery (coin cell) 11 such as shown in Fig. 3, wherein an electrolytic solution is filled between a positive electrode plate 12 and a negative electrode plate 13 with a separator 6 provided between them; and a cylindrical lithium secondary battery such as shown in Fig. 4, using an electrode body 21 formed by winding or laminating, via a separator 6, a positive electrode plate 12 (prepared by coating a positive electrode active material on a metal foil) and a negative electrode 13 (prepared by coating a negative electrode active material on a metal foil).

EXAMPLES

The present invention is described specifically below by way of Examples. However, the present invention is in no way restricted to the following Examples. Incidentally, in the following Examples and Comparative Examples, "parts" are based on mass unless otherwise specified. The measurement methods of properties and the evaluation methods of properties are shown below.

[Proportion (areal %) of primary particles of 5 to 20 $\mu$m in particle diameter]

The area (A) occupied by all the crystal grains whose particle diameters can be measured and the area (a) occupied by the primary particles of 5 to 20 $\mu$m in particle diameter were measured using an image edit software ("Photoshop" (trade name), a product of Adobe Systems Incorporated); they were substituted into an expression ((a/A) x100); thereby, the proportion of the primary particles of 5 to 20 $\mu$m in particle diameter was calculated.

[Particle diameters ($\mu$m) of primary particles]

A positive electrode active material powder was placed on a carbon tape so that there was no piling of particles; Au was sputtered thereon in a thickness of about 10 nm using an ion sputtering apparatus ("JFC-1500" (trade name), a product of JEOL Ltd.); then, a secondary electron image of particles was taken, using a scanning electron microscope ("JSM-6390" (trade name), a product of JEOL Ltd.), by selecting such a display magnification that 20 to 50 primary particles each having the maximum diameter of 5 $\mu$m or larger were in the visual field (the photographing conditions were accelerating voltage of 15 kV and working distance of 10 mm) . For each primary particle in the image obtained, there was calculated an average of the maximum diameter of the particle part not hidden by other particles and the largest diameter of the diameters at right angles to the above maximum diameter, and the average was taken as the particle diameter ($\mu$m) of the primary particle. In this way, particle diameters were measured for all primary particles excluding particles which are hidden by other particles and are uncalculable.

[Specific surface area ($m^2/g$)]

Measured using "Flowsorb III 2305" (trade name) (a product of Shimadzu Corporation), by using nitrogen as an adsorption gas.

[Proportion (mol %) of bismuth]

Measured using an ICP (inductively coupled plasma) optical emission spectrometer. Specifically explaining, a sample solution prepared by adding hydrochloric acid to crystal grains and decomposing the mixture under pressure was placed in an ICP optical emission spectrometer ("ULTIMA 2" (trade name), a product of HORIBA, Ltd.) to quantitatively determine Li, Mn and Bi, and the proportion of the bismuth contained in bismuth compound relative to the manganese contained in lithium manganate was calculated based on the determination results.

[Kind of Bi compound]

Identified by X-ray diffraction measurement ("RAD-IB" (trade name), a product of Rigaku Corporation) (hereinafter, referred to as "XRD") . When the compound amount was so small as not to be identified by the X-ray diffraction measurement, there was used electron probe microanalysis ("JXA-8800" (trade name), a product of JEOL Ltd.) (hereinafter, referred to as "EPMA") ; when another component was detected at a region where Bi was detected, it was interpreted that Bi was present as a compound with the other component.

[Proportion (areal %) of single particles]

A positive electrode active material was mixed with a conductive resin ("Technovit 5000" (trade name), a product of Heraeus Kulzer GmbH), followed by curing. Then, the cured material was subjected to mechanical grinding and then ion-polished using a cross section polisher ("SM-09010" (trade name), a product of JEOL Ltd.). The backscattered electron image of the cross section of the positive electrode active material was observed, using a scanning electron microscope ("ULTRA 55" (trade name), a product of Carl Zeiss, Inc.).

In the backscattered electron image, the contrast differs owing to channeling effect when the crystallographic orientation differs. Therefore, when a grain boundary part is present in the crystal grain being observed, the grain boundary part becomes clear or unclear by slightly changing the direction of observation of sample (the inclination of sample) . Utilizing this phenomenon, the presence of grain boundary part can be confirmed; thereby, there can be identified whether or not a crystal grain is a single particle, or a polycrystal particle formed by connection of primary particles of different crystal directions or an agglomerated particle.

There is a case in which microparticles (crystal grains) significantly smaller in diameter (e.g. about 0.1 to 1 $\mu$m) than the particle diameter of single particle adhere onto the surface of a crystal grain (see Fig. 6A). Also, there is a case in which polycrystal particles or agglomerated particles adhere onto each other at a small part (see Fig. 6B). In such cases, the parts (adhesion parts 50a to 50c in Fig. 6A) at which microparticles 41 to 43 adhere onto the surface of a crystal grain 31, and the part (adhesion part 50d in Fig. 6B) at which crystal grains 32 and 33 are in contact with each other, are slight; therefore, there is no influence on rate characteristics and durability. Accordingly, such crystal grains can be regarded substantially as single particle. Specifically explaining, when the length of adhesion part (the total of all adhesion parts when there were a plurality of adhesion parts) of a crystal grain was 1/5 or smaller relative to the circumference of the crystal grain estimated from the backscattered electron image by using an image edit software ("Image-Pro" (trade name), a product of Media Cybernetics, Inc.), the crystal grain was regarded as single particle and was counted.

In this way, there was judged whether or not each crystal grain was a single particle. The proportion (areal %) of single particles was calculated by measuring the area (B) occupied by all crystal grains whose areas could be measured from the backscattered electron image and the area (b) occupied by all single particles by using the above-mentioned image edit software and substituting them into an expression (b/B)x100.

[Initial capacity (mAh/g)]

At a test temperature of 20˚C, constant-current charge was conducted at current value of 0.1 C-rate until the battery voltage became 4.3 V. Constant-voltage charge was conducted at a current condition of keeping the battery voltage at 4.3 V until the current decreased to 1/20. Then, a halt of 10 minutes was conducted. Subsequently, constant-current discharge was conducted at a current value of 1C-rate until the battery voltage became 3.0 V. Then, a halt of 10 minutes was conducted. This charge-discharge operation was taken as 1 cycle. Total 3 cycles were repeated at 20˚C. A discharge capacity at the 3rd cycle was measured and taken as initial capacity.

[Value of lattice strain ($\eta$)]

The powder X-ray diffraction pattern of a sample was obtained using "D8 ADVANCE" (a product of Bruker AXS Ltd.) under the following conditions and analyzed according to the WPPD method to calculate the value of the lattice strain of the sample.

X-ray output: 40 kV x 40 mA
Goniometer radius: 250 mm
Divergence slit: 0.6˚
Scattering slit: 0.6˚
Receiving slit: 0.1 mm
Soller slit: 2.5˚ (incidence side, receiving side)
Measurement method: 2 $\theta$/$\theta$ method in a focus optical geometry of horizontally-placed sample type (2 $\theta$ of 15 to 140˚ was measured, step width of 0.01˚)
Scanning time: Set so that the intensity of main peak ((111) face) became about 10,000 counts.

The specific analytical procedure is described below. The value of the lattice strain ($\eta$) obtained by other analytical procedures may be different from the value of the lattice strain ($\eta$) obtained by the present analytical procedure; however, these are not excluded from the scope of the present invention. In the present invention, the evaluation of the value of the lattice strain should be made using the value of the lattice strain ($\eta$) obtained by the present analytical procedure.

1. Start of software (TOPAS) and load of measured data
2. Setting of emission profile (selection of Cu tube and Bragg-Brentano type focusing optical geometry)
3. Setting of background (the Legendre polynominal is used as profile function, and the number of terms is set at 8 to 20.)
4. Setting of instrument (fundamental parameter is used, and slit conditions, filament length and sample length are input.)
5. Setting of corrections (sample displacement is used; absorption is also used when the filling density of sample in sample holder is low; in this case, absorption is set at the linear absorption coefficient of sample.)
6. Setting of crystal structure (space group is set at F-d3m; lattice constant, crystallite size and lattice strain are used; and the spread of profile by crystallite size and lattice strain is set as Lorenz function.)
7. Calculation (background, sample displacement, diffraction intensity, lattice constant, crystallite size and lattice strain are made precise.)
8. Analysis is over when the standard deviation of crystallite size is 6% or smaller of the crystallite size which has been made precise. When the standard deviation is larger than 6%, moves to the procedure 9.
9. The spread of profile by lattice strain is set as Gauss function (the setting of the crystallite size as Lorenz function is unchanged.)
10. Calculation (background, sample displacement, diffraction intensity, lattice constant, crystallite size and lattice strain are made precise.)
11. Analysis is over when the standard deviation of crystallite size is 6% or smaller of the crystallite size which has been made precise. When the standard deviation is larger than 6%, analysis is impossible.
12. The value of the lattice strain obtained is multiplied by $\pi$/180, and the value is taken as $\eta$.

[Cycle characteristics (%)]

At a test temperature of 60˚C, charge was conducted at a constant current and constant voltage of 1C rate until the battery voltage became 4.3 V, and discharge was conducted at a constant current of 1C rate until the battery voltage became 3.0 V. Hundred cycles of charge-discharge were repeated. Thereafter, the discharge capacity of the battery was divided by the initial capacity and the value expressed in percentage was taken as cycle characteristics.

[Rate characteristics (%)]

At a test temperature of 20˚C, constant-current charge was conducted at a current value of 0.1 C-rate until the battery voltage became 4.3 V. Constant-voltage charge was conducted at a current condition of keeping the battery voltage at 4.3 V until the current value decreased to 1/20. Then, a halt of 10 minutes was conducted. Subsequently, constant-current discharge was conducted at a current value of 1 C-rate until the battery voltage became 3.0 V. Then, a halt of 10 minutes was conducted. This charge-discharge operation was taken as 1 cycle. Total 3 cycles were repeated at 20˚C. A discharge capacity at the 3rd cycle was measured and taken as discharge capacity $C_{(1C)}$. Next, at a test temperature of 20˚C, constant-current charge was conducted at a current value of 0.1 C-rate until the battery voltage became 4.3 V. Constant-voltage charge was conducted at a current condition of keeping the battery voltage at 4.3 V until the current value decreased to 1/20. Then, a halt of 10 minutes was conducted. Subsequently, constant-current discharge was conducted at a current value of 5 C-rate until the battery voltage became 3.0 V. Then, a halt of 10 minutes was conducted. This charge-discharge operation was taken as 1 cycle. Total 3 cycles were repeated at 20˚C. A discharge capacity at the 3rd cycle was measured and taken as discharge capacity $C_{(5c)}$. The capacity maintenance rate (%) of the discharge capacity $C_{(5C)}$ at 5C rate to the discharge capacity $C_{(1C)}$ at 1C rate was calculated and taken as rate characteristics.

(Examples 1 to 12 and Comparative Examples 1 to 14: Production of positive electrode active materials)

(1) Raw material preparation step

There were weighed a $Li_2CO_3$ powder (a product of The Honjo Chemical Corporation, fine grade, average particle diameter: 3 $\mu$m) and a $MnO_2$ powder (a product of Tosoh Corporation, electrolytic manganese dioxide, FM grade, average particle diameter: 5 $\mu$m, purity: 95%), to give a chemical formula of $Li_{1.1}Mn_{1.9}O_4$. Further, a $Bi_2O_3$ powder (average particle diameter: 0.3 $\mu$m, a product of Taiyo Koko Co., Ltd.) was weighed so that the addition amount of Bi relative to the Mn contained in the $MnO_2$ raw material became an amount shown in Table 1 or Table 2. Hundred parts of these powders and 100 parts of an organic solvent (as a dispersing medium) (a mixed solvent of equal volumes of toluene and isopropyl alcohol) were placed in a cylindrical, wide-mouthed bottle made of a synthetic resin and subjected to wet mixing and grinding for 16 hours with a ball mill containing zirconia balls of 5 mm in diameter, to obtain a mixed powder.

(2) Sheet formation step

Ten parts of a polyvinyl butyral (as a binder) ("S-LEC BM-2" (trade name), a product of Sekisui Chemical Co., Ltd.), 4 parts of a plasticizer (("DOP" (trade name), a product of Kurogane Kasei Co., Ltd.) and 2 parts of a dispersing agent ("RHEODOL SP-O 30" (trade name), a product of Kao Corporation) were added to the mixed powder, followed by mixing, thereby a forming material of slurry state was obtained. The forming material of slurry state was degassed under vacuum with stirring, to adjust the slurry viscosity to 4,000 mPa·s. The viscosity-adjusted forming material of slurry state was spread on a PET film by doctor blade method, to obtain each sheet-shaped formed body. Incidentally, the thickness of each sheet-shaped formed body after drying is shown in Table 1 or Table 2.

(3) Firing step

The sheet-shaped formed body was peeled off from the PET film, cut into a 300 mm x 300 mm size using a cutter, and placed in an alumina-made sagger (dimension: 90 mm x 90 mm x 60 mm (height)) in a crumpled state. Degreasing was conducted at 600˚C for 2 hours in a cover-opened state (that is, under the air), after that firing was conducted at a temperature shown in Table 1 or Table 2, for 12 hours.

(4) Grinding step

The sheet-shaped formed body after firing was placed on a polyester-made mesh having an average opening diameter selected under the following conditions, and pressed against the mesh lightly using a spatula, for disintegration.

When the sheet-shaped formed body had a thickness of 10 $\mu$m or less: average opening diameter = 10 $\mu$m
When the sheet-shaped formed body had a thickness of 11 to 20 $\mu$m: average opening diameter = 20 $\mu$m

When the sheet-shaped formed body had a thickness of more than 20 $\mu$m: average opening diameter = 40 $\mu$m

(5) Classification step

The powder obtained was dispersed in ethanol and subjected to an ultrasonic treatment (38 kHz, 5 minutes) using an ultrasonic cleaner. Then, the resulting material was passed through a polyester-made mesh having an average opening diameter of 5 $\mu$m in order to remove the fine powder of 5 $\mu$m or less in particle diameter generated during the firing or grinding, and then a powder remaining on the mesh was recovered.

(6) Re-heating step

The primary particles having an intended diameter, recovered via the grinding step and the classification step, were heat-treated under the air at 650°C for 24 hours to produce a positive electrode active material.

In Table 1 and Table 2 are shown the addition amount of Bi in the raw material preparation step, the thickness of the sheet-shaped formed body after drying, the firing temperature in the firing step, the proportion of primary particles of 5 to 20 $\mu$m in particle diameter, the specific surface area of positive electrode active material, the proportion of Bi, and the kind of Bi compound, in each of Examples 1 to 12 and Comparative Examples 1 to 14.

Table 1

| | Thickness of sheet-shaped formed body ($\mu$m) | Addition amount of Bi (mol %) | Firing temperature (°C) | Properties of positive electrode active material | | | |
| | | | | Proportion of primary particles of 5-20 $\mu$m in particle diameter (areal %) | Specific surface area (m$^2$/g) | Proportion of Bi (mol %) | Kind of Bi compound |
|---|---|---|---|---|---|---|---|
| Comparative Example 1 | 10 | 0 | 950 | 70 | 0.46 | <0.001 | - |
| Comparative Example 2 | 16 | 0 | 1050 | 85 | 0.20 | <0.001 | - |
| Comparative Example 3 | 24 | 0 | 1100 | 85 | 0.12 | <0.001 | - |
| Comparative Example 4 | 8 | 0.03 | 900 | 45 | 0.65 | 0.005 | Bi-Mn compound (EPMA) |
| Example 1 | 10 | 0.03 | 900 | 70 | 0.50 | 0.005 | Bi-Mn compound (EPMA) |
| Example 2 | 16 | 0.05 | 950 | 90 | 0.23 | 0.005 | Bi-Mn compound (EPMA) |
| Example 3 | 22 | 0.05 | 950 | 95 | 0.13 | 0.005 | Bi-Mn compound (EPMA) |
| Comparative Example 5 | 34 | 0.1 | 1100 | 55 | 0.07 | 0.005 | Bi-Mn compound (EPMA) |
| Comparative Example 6 | 8 | 0.1 | 900 | 50 | 0.65 | 0.01 | Bi-Mn compound (EPMA) |

(continued)

| | Thickness of sheet-shaped formed body ($\mu$m) | Addition amount of Bi (mol %) | Firing temperature (°C) | Properties of positive electrode active material | | | |
|---|---|---|---|---|---|---|---|
| | | | | Proportion of primary particles of 5-20 $\mu$m in particle diameter (areal %) | Specific surface area (m²/g) | Proportion of Bi (mol %) | Kind of Bi compound |
| Example 4 | 10 | 0.1 | 900 | 75 | 0.48 | 0.01 | Bi-Mn compound (EPMA) |
| Example 5 | 16 | 0.2 | 950 | 95 | 0.24 | 0.01 | Bi-Mn compound (EPMA) |
| Example 6 | 22 | 0.2 | 1000 | 80 | 0.14 | 0.01 | Bi-Mn compound (EPMA) |
| Comparative Example 7 | 34 | 0.4 | 1100 | 50 | 0.07 | 0.01 | Bi-Mn compound (EPMA) |

Table 2

| | Thickness of sheet-shaped formed body ($\mu$m) | Addition amount of Bi (mol %) | Firing temperature (°C) | Properties of positive electrode active material | | | |
|---|---|---|---|---|---|---|---|
| | | | | Proportion of primary particles of 5-20 $\mu$m in particle diameter (areal %) | Specific surface area (m²/g) | Proportion of Bi (mol %) | Kind of Bi compound |
| Comparative Example 8 | 8 | 0.4 | 900 | 55 | 0.70 | 0.1 | $Bi_2O_3$, $Bi_2Mn_4O_{10}$ (XRD) |
| Example 7 | 10 | 0.4 | 900 | 80 | 0.50 | 0.1 | $Bi_2O_3$, $Bi_2Mn_9O_{10}$ (XRD) |
| Example 8 | 16 | 0.4 | 900 | 95 | 0.22 | 0.1 | $Bi_2O_3$, $Bi_2Mn_4O_{10}$ (XRD) |
| Example 9 | 22 | 0.6 | 950 | 80 | 0.13 | 0.1 | $Bi_2O_3$, $Bi_2Mn_4O_{10}$ (XRD) |
| Comparative Example 9 | 34 | 0.8 | 1050 | 40 | 0.06 | 0.1 | $Bi_2O_3$, $Bi_2Mn_4O_{10}$ (XRD) |
| Comparative Example 10 | 8 | 1.5 | 900 | 55 | 0.63 | 0.5 | $Bi_2O_3$, $Bi_2Mn_4O_{10}$ (XRD) |

(continued)

| | Thickness of sheet-shaped formed body ($\mu$m) | Addition amount of Bi (mol %) | Firing temperature (˚C) | Properties of positive electrode active material | | | |
|---|---|---|---|---|---|---|---|
| | | | | Proportion of primary particles of 5-20 $\mu$m in particle diameter (areal %) | Specific surface area ($m^2$/g) | Proportion of Bi (mol %) | Kind of Bi compound |
| Example 10 | 10 | 1.5 | 900 | 85 | 0.49 | 0.5 | $Bi_2O_3$, $Bi_2Mn_4O_{10}$ (XRD) |
| Example 11 | 16 | 1.5 | 900 | 95 | 0.25 | 0.5 | $Bi_2O_3$, $Bi_2Mn_4O_{10}$ (XRD) |
| Example 12 | 22 | 1.5 | 900 | 80 | 0.14 | 0.5 | $Bi_2O_3$, $Bi_2Mn_4O_{10}$ (XRD) |
| Comparative Example 11 | 34 | 4 | 1050 | 35 | 0.07 | 0.5 | $Bi_2O_3$, $Bi_2Mn_4O_{10}$ (XRD) |
| Comparative Example 12 | 10 | 2.5 | 900 | 80 | 0.48 | 1 | $Bi_2O_3$, $Bi_2Mn_4O_{10}$ (XRD) |
| Comparative Example 13 | 16 | 2.5 | 900 | 95 | 0.25 | 1 | $Bi_2O_3$, $Bi_2Mn_4O_{10}$ (XRD) |
| Comparative Example 14 | 22 | 2.5 | 900 | 90 | 0.13 | 1 | $Bi_2O_3$, $Bi_2Mn_4O_{10}$ (XRD) |

(Examples 13 to 24 and Comparative Examples 15 to 28: Production of lithium secondary batteries)

Fig. 3 is a sectional view showing an embodiment of the lithium secondary battery of the present invention. In Fig. 3, a lithium secondary battery (coin cell) 11 was produced by laminating a positive electrode collector 15, a positive electrode layer 14, a separator 6, a negative electrode layer 16 and a negative electrode collector 17 in this order, and encapsulating the resulting laminate and an electrolyte in a battery case 4 (containing a positive electrode side container 18, a negative electrode side container 19 and an insulation gasket 5) in liquid tight.

Specifically explaining, there were mixed 5 mg of each of the positive electrode active materials produced in Examples 1 to 12 and Comparative Examples 1 to 14, acetylene black (as a conductive agent) and a polytetrafluoroethylene (PTFE) (as a binder) at a mass ratio of 5:5:1, to produce each positive electrode material. The positive electrode material was placed on an Al mesh of 15 mm in diameter and press-molded into a disc using a press at a force of 10 kN, to produce each positive electrode layer 14.

Then, each lithium secondary battery (coin cell) 11 was produced using the above-produced positive electrode layer 14, an electrolytic solution prepared by dissolving $LiPF_6$ in an organic solvent consisting of equal volumes of ethylene carbonate (EC) and diethyl carbonate (DEC), so as to give a $LiPF_6$ concentration of 1 mol/L, a negative electrode layer 16 made of a Li metal plate, a negative electrode collector 17 made of a stainless steel plate, and a polyethylene film-made separator 6 having lithium ion permeability. By using each lithium secondary battery (coin cell) 11 produced, initial capacity and cycle characteristics were evaluated. The evaluation results are shown in Table 3 and Table 4.

Table 3

| | Kind of positive electrode active material | Initial capacity (mAh/g) | Cycle characteristics (%) |
|---|---|---|---|
| Comparative Example 15 | Comparative Example 1 | 105 | 75 |
| Comparative Example 16 | Comparative Example 2 | 105 | 76 |
| Comparative Example 17 | Comparative Example 3 | 104 | 77 |
| Comparative Example 18 | Comparative Example 4 | 103 | 76 |
| Example 13 | Example 1 | 104 | 82 |
| Example 14 | Example 2 | 103 | 86 |
| Example 15 | Example 3 | 105 | 84 |
| Comparative Example 19 | Comparative Example 5 | 104 | 77 |
| Comparative Example 20 | Comparative Example 6 | 103 | 77 |
| Example 16 | Example 4 | 105 | 83 |
| Example 17 | Example 5 | 103 | 87 |
| Example 18 | Example 6 | 103 | 85 |
| Comparative Example 21 | Comparative Example 7 | 103 | 79 |

Table 4

| | Kind of positive electrode active material | Initial capacity (mAh/g) | Cycle characteristics (%) |
|---|---|---|---|
| Comparative example 22 | Comparative Example 8 | 105 | 77 |
| Example 19 | Example 7 | 103 | 84 |
| Example 20 | Example 8 | 104 | 86 |
| Example 21 | Example 9 | 105 | 86 |
| Comparative Example 23 | Comparative Example 9 | 104 | 78 |
| Comparative Example 24 | Comparative Example 10 | 102 | 76 |
| Example 22 | Example 10 | 103 | 85 |
| Example 23 | Example 11 | 100 | 85 |
| Example 24 | Example 12 | 102 | 86 |
| Comparative Example 25 | Comparative Example 11 | 103 | 77 |
| Comparative Example 26 | Comparative Example 12 | 94 | 86 |
| Comparative Example 27 | Comparative Example 13 | 94 | 87 |
| Comparative Example 28 | Comparative Example 14 | 96 | 84 |

As is clear from Table 3 and Table 4, when the proportion of bismuth was less than 0.005 mol % (Comparative Examples 15 to 17), the cycle characteristics was inferior irrespective of the proportion of primary particles of 5 to 20 $\mu$m in particle diameter and the specific surface area of positive electrode active material. Also, when the proportion of bismuth was more than 0.5 mol % (Comparative Examples 26 to 28), the cycle characteristics was good but the initial capacity was low. Further, when the proportion of bismuth was 0.005 to 0.5 mol % but the proportion of primary particles of 5 to 20 $\mu$m in particle diameter and the specific surface area of positive electrode active material were not within intended ranges (Comparative Examples 18 to 25), the cycle characteristics was inferior. Meanwhile, when the positive electrode active material of the present invention was used (Examples 13 to 24), lithium secondary batteries superior in cycle characteristics at high temperatures and good in initial capacity could be produced.

(Examples 25 to 36 and Comparative Examples 29 to 42: Production of positive electrode active materials)

(1) Raw material preparation step

There were weighed a $Li_2CO_3$ powder (a product of The Honjo Chemical Corporation, fine grade, average particle diameter: 3 $\mu$m) , a $MnO_2$ powder (a product of Tosoh Corporation, electrolytic manganese dioxide, FM grade, average particle diameter: 5 $\mu$m, purity: 95%), and an $Al(OH)_3$ powder (H-43M, a product of Showa Denko K. K. , average particle diameter: 0.8 $\mu$m) , to give a chemical formula of $Li_{1.08}Mn_{1.83}Al_{0.09}O_4$. Further, a $Bi_2O_3$ powder (average particle diameter: 0.3 $\mu$m, a product of Taiyo Koko Co., Ltd) was weighed so that the addition amount of Bi relative to the Mn contained in the $MnO_2$ raw material became an amount shown in Table 5 or Table 6. Hundred parts of these powders and 100 parts of an organic solvent (as a dispersing medium) (a mixed solvent of equal volumes of toluene and isopropyl alcohol) were placed in a cylindrical, wide-mouthed bottle made of a synthetic resin and subjected to wet mixing and grinding for 16 hours with a ball mill containing zirconia balls of 5 mm in diameter, to obtain a mixed powder.
(2) Sheet formation step to (6) re-heating step were conducted in the same manner as in Examples 1 to 12 and Comparative Examples 1 to 14, to produce each positive electrode active material.
In Table 5 and Table 6 are shown the addition amount of Bi in the raw material preparation step, the thickness of the sheet-shaped formed body after drying, the firing temperature in the firing step, the proportion of primary particles of 5 to 20 $\mu$m in particle diameter, the specific surface area of positive electrode active material, the proportion of Bi, and the kind of Bi compound, in each of Examples 25 to 36 and Comparative Examples 29 to 42.
Table 5

Table 5

|  | | Properties of positive electrode active material | | | | |
|---|---|---|---|---|---|---|
|  | Thickness of sheet-shaped formed body ($\mu$m) | Addition amount of Bi (mol %) | Firing temperature (˚C) | Proportion of primary particles of 5-20 $\mu$m in particle diameter (areal %) | Specific surface area ($m^2$/g) | Proportion of Bi (mol %) | Kind of Bi compound |
| Comparative Example 29 | 10 | 0 | 950 | 70 | 0.45 | <0.001 | - |
| Comparative Example 30 | 16 | 0 | 1050 | 85 | 0.18 | <0.001 | - |
| Comparative Example 31 | 24 | 0 | 1100 | 85 | 0.12 | <0.001 | - |
| Comparative Example 32 | 6 | 0.03 | 900 | 45 | 0.70 | 0.005 | Bi-Mn compound (EPMA) |
| Example 25 | 10 | 0.03 | 900 | 70 | 0.46 | 0.005 | Bi-Mn compound (EPMA) |
| Example 26 | 16 | 0.05 | 950 | 90 | 0.29 | 0.005 | Bi-Mn compound (EPMA) |
| Example 27 | 22 | 0.05 | 950 | 95 | 0.13 | 0.005 | Bi-Mn compound (EPMA) |
| Comparative Example 33 | 34 | 0.1 | 1100 | 55 | 0.09 | 0.005 | Bi-Mn compound (EPMA) |

(continued)

| | Thickness of sheet-shaped formed body ($\mu$m) | Addition amount of Bi (mol %) | Firing temperature (°C) | Properties of positive electrode active material | | | |
|---|---|---|---|---|---|---|---|
| | | | | Proportion of primary particles of 5-20 $\mu$m in particle diameter (areal %) | Specific surface area ($m^2$/g) | Proportion of Bi (mol %) | Kind of Bi compound |
| Comparative Example 34 | 6 | 0.1 | 900 | 50 | 0.69 | 0.01 | Bi-Mn compound (EPMA) |
| Example 28 | 10 | 0.1 | 900 | 75 | 0.49 | 0.01 | Bi-Mn compound (EPMA) |
| Example 29 | 16 | 0.2 | 950 | 95 | 0.24 | 0.01 | Bi-Mn compound (EPMA) |
| Example 30 | 22 | 0.2 | 1000 | 80 | 0.15 | 0.01 | Bi-Mn compound (EPMA) |
| Comparative Example 35 | 34 | 0.4 | 1100 | 50 | 0.08 | 0.01 | Bi-Mn compound (EPMA) |

Table 6

| | Thickness of sheet-shaped formed body ($\mu$m) | Addition amount of Bi (mol %) | Firing temperature (°C) | Properties of positive electrode active material | | | |
|---|---|---|---|---|---|---|---|
| | | | | Proportion of primary particles of 5-20 $\mu$m in particle diameter (areal %) | Specific surface area ($m^2$/g) | Proportion of Bi (mol %) | Kind of Bi compound |
| Comparative Example 36 | 8 | 0.4 | 900 | 55 | 0.72 | 0.1 | $Bi_2O_3$, $Bi_2Mn_4O_{10}$ (XRD) |
| Example 31 | 10 | 0.4 | 900 | 80 | 0.48 | 0.1 | $Bi_2O_3$, $Bi_2Mn_4O_{10}$ (XRD) |
| Example 32 | 16 | 0.4 | 900 | 95 | 0.19 | 0.1 | $Bi_2O_3$, $Bi_2Mn_4O_{10}$ (XRD) |
| Example 33 | 22 | 0.6 | 950 | 80 | 0.11 | 0.1 | $Bi_2O_3$, $Bi_2Mn_4O_{20}$ (XRD) |
| Comparative Example 37 | 34 | 0.8 | 1050 | 40 | 0.07 | 0.1 | $Bi_2O_3$, $Bi_2Mn_4O_{10}$ (XRD) |

(continued)

| | Thickness of sheet-shaped formed body ($\mu$m) | Addition amount of Bi (mol %) | Firing temperature (˚C) | Properties of positive electrode active material | | | |
|---|---|---|---|---|---|---|---|
| | | | | Proportion of primary particles of 5-20 $\mu$m in particle diameter (areal %) | Specific surface area ($m^2$/g) | Proportion of Bi (mol %) | Kind of Bi compound |
| Comparative Example 38 | 8 | 1.5 | 900 | 55 | 0.72 | 0.5 | $Bi_2O_3$, $Bi_2Mn_4O_{10}$ (XRD) |
| Example 34 | 10 | 1.5 | 900 | 85 | 0.50 | 0.5 | $Bi_2O_3$, $Bi_2Mn_4O_{10}$ (XRD) |
| Example 35 | 16 | 1.5 | 900 | 95 | 0.27 | 0.5 | $Bi_2O_3$, $Bi_2Mn_4O_{10}$ (XRD) |
| Example 36 | 22 | 1.5 | 900 | 80 | 0.14 | 0.5 | $Bi_2O_3$, $Bi_2Mn_4O_{10}$ (XRD) |
| Comparative Example 39 | 34 | 2 | 1050 | 35 | 0.06 | 0.5 | $Bi_2O_3$, $Bi_2Mn_4O_{10}$ (XRD) |
| Comparative Example 40 | 10 | 2.5 | 900 | 80 | 0.49 | 1 | $Bi_2O_3$, $Bi_2Mn_4O_{10}$ (XRD) |
| Comparative Example 41 | 16 | 2.5 | 900 | 95 | 0.25 | 1 | $Bi_2O_3$, $Bi_2Mn_4O_{10}$ (XRD) |
| Comparative Example 42 | 22 | 2.5 | 900 | 90 | 0.14 | 1 | $Bi_2O_3$, $Bi_2Mn_4O_{10}$ (XRD) |

(Examples 37 to 48 and Comparative Examples 43 to 56: Production of lithium secondary batteries)
Lithium secondary batteries were produced in the same manner as in Examples 13 to 24 and Comparative Examples 15 to 28 except that the positive electrode active materials produced in Examples 25 to 36 and Comparative Examples 29 to 42 were used. By using each lithium secondary battery produced, initial capacity and cycle characteristics were evaluated. The evaluation results are shown in Table 7 and Table 8.
Table 7

| | Kind of positive electrode active material | Initial capacity (mAh/g) | Cycle characteristics (%) |
|---|---|---|---|
| Comparative Example 43 | Comparative Example 29 | 101 | 80 |
| Comparative Example 44 | Comparative Example 30 | 100 | 79 |
| Comparative Example 45 | Comparative Example 31 | 100 | 80 |
| Comparative Example 46 | Comparative Example 32 | 100 | 78 |
| Example 37 | Example 25 | 100 | 84 |

(continued)

|  | Kind of positive electrode active material | Initial capacity (mAh/g) | Cycle characteristics (%) |
|---|---|---|---|
| Example 38 | Example 26 | 99 | 89 |
| Example 39 | Example 27 | 101 | 88 |
| Comparative Example 47 | Comparative Example 33 | 99 | 80 |
| Comparative Example 48 | Comparative Example 34 | 100 | 81 |
| Example 40 | Example 28 | 101 | 90 |
| Example 41 | Example 29 | 101 | 90 |
| Example 42 | Example 30 | 100 | 88 |
| Comparative Example 49 | Comparative Example 35 | 100 | 81 |

Table 8

|  | Kind of positive electrode active material | Initial capacity (mAh/g) | Cycle characteristics (%) |
|---|---|---|---|
| Comparative Example 50 | Comparative Example 36 | 102 | 80 |
| Example 43 | Example 31 | 101 | 90 |
| Example 44 | Example 32 | 101 | 89 |
| Example 45 | Example- 33 | 102 | 88 |
| Comparative Example 51 | Comparative Example 37 | 100 | 80 |
| Comparative Example 52 | Comparative Example 38 | 99 | 79 |
| Example 46 | Example 34 | 100 | 88 |
| Example 47 | Example 35 | 98 | 90 |
| Example 48 | Example 36 | 98 | 89 |
| Comparative Example 53 | Comparative Example 39 | 97 | 81 |
| Comparative Example 54 | Comparative Example 40 | 91 | 88 |
| Comparative Example 55 | Comparative Example 41 | 90 | 88 |
| Comparative Example 56 | Comparative Example 42 | 92 | 87 |

As is clear from Table 7 and Table 8, when the proportion of bismuth was less than 0.005 mol % (Comparative Examples 43 to 45), the cycle characteristics was inferior irrespective of the proportion of primary particles of 5 to 20 $\mu$m in particle diameter and the specific surface area of positive electrode active material. Also, when the proportion of bismuth was more than 0.5 mol % (Comparative Examples 54 to 56), the cycle characteristics was good but the initial capacity was low. Further, when the proportion of bismuth was 0.005 to 0.5 mol % but the proportion of primary particles of 5 to 20 $\mu$m in particle diameter and the specific surface area of positive electrode active material were not within intended ranges (Comparative Examples 46 to 53), the cycle characteristics was inferior. Meanwhile, when the positive electrode active material of the present invention was used (Examples 37 to 48), lithium secondary batteries superior in cycle characteristics at high temperatures and good in initial capacity could be produced.

(Examples 49 to 52, Comparative Examples 57 to 60, and Reference Examples 1 to 2: Production of positive electrode active materials)

(1) Raw material preparation step

In Examples 49 and 50, Comparative Examples 57 to 58 and Reference Example 1, mixed powders were obtained in the same manner as in Examples 1 to 12 and Comparative Examples 1 to 14, so as to give a chemical formula of $Li_{1.1}Mn_{1.9}O_4$. In Examples 51 and 52, Comparative Examples 59 and 60 and Reference Example 2, mixed powders were obtained in the same manner as in Examples 25 to 36 and Comparative Examples 29 to 42, so as to give a chemical formula of $Li_{1.08}Mn_{1.83}Al_{0.09}O_4$,

(2) Sheet formation step to (6) re-heating step were conducted in the same manner as in Examples 1 to 12 and Comparative Examples 1 to 14, to produce each positive electrode active material. Incidentally, in Examples 50 and Example 52, the firing of the firing step (3) was conducted under oxygen atmosphere.

In Table 9 are shown the addition amount of Bi in the raw material preparation step, the thickness of the sheet-shaped formed body after drying, the firing temperature and firing atmosphere in the firing step, the proportion of primary particles of 5 to 20 $\mu$m in particle diameter, the specific surface area of positive electrode active material, the proportion of Bi, the kind of Bi compound and the value of the lattice strain ($\eta$), in each of Examples 49 to 52, Comparative Examples 57 to 60, Reference Examples 1 and 2.

Table 9

| | Chemical formula | Thickness of sheet-shaped formed body ($\mu$m) | Addition amount of Bi (mol %) | Firing temp. (°C) | Firing atmosphere | Properties of positive electrode active material | | | | |
|---|---|---|---|---|---|---|---|---|---|---|
| | | | | | | Proportion of primary particles of 5-20 $\mu$m in particle diameter (areal %) | Specific surface area (m²/g) | Proportion of Bi (mol %) | Kind of Bi compound | Value of the Lattice strain ($\eta$) (x10⁻³) |
| Comp. Ex. 57 | $Li_{1.1}Mn_{1.9}O_4$ | 32 | 0.4 | 900 | Air | 60 | 0.08 | 0.01 | Bi-Mn compound (EPMA) | 0.264 |
| Ref. Ex. 1 | $Li_{1.1}Mn_{1.9}O_4$ | 10 | 0.4 | 1000 | Air | 75 | 0.48 | 0.01 | Bi-Mn compound (EPMA) | 0.892 |
| Ex. 49 | $Li_{1.1}Mn_{1.9}O_4$ | 15 | 0.3 | 950 | Air | 80 | 0.24 | 0.01 | Bi-Mn compound (EPMA) | 0.622 |
| Ex. 50 | $Li_{1.1}Mn_{1.9}O_4$ | 15 | 0.3 | 950 | Oxygen | 90 | 0.22 | 0.01 | Bi-Mn compound (EPMA) | 0.252 |
| Comp. Ex. 58 | $Li_{1.1}Mn_{1.9}O_4$ | 15 | 2 | 900 | Air | 80 | 0.25 | 0.8 | $Bi_2Mn_4O_{10}$ (XRD) | 0.344 |
| Comp. Ex. 59 | $Li_{1.08}Mn_{1.83}Al_{0.09}O_4$ | 32 | 0.4 | 900 | Air | 60 | 0.09 | 0.01 | Bi-Mn compound (EPMA) | 0.324 |
| Ref. Ex. 2 | $Li_{1.08}Mn_{1.83}Al_{0.09}O_4$ | 10 | 0.4 | 1000 | Air | 75 | 0.45 | 0.01 | Bi-Mm compound (EPMA) | 0.922 |
| Ex. 51 | $Li_{1.08}Mn_{1.83}Al_{0.09}O_4$ | 15 | 0.3 | 950 | Air | 80 | 0.28 | 0.01 | Bi-Mn compound (EPMA) | 0.656 |

(continued)

| Chemical formula | Thickness of sheet-shaped formed body (μm) | Addition amount of Bi (mol %) | Firing temp. (°C) | Firing atmosphere | Proportion of primary particles of 5-20 μm in particle diameter (areal %) | Properties of positive electrode active material | | | |
|---|---|---|---|---|---|---|---|---|---|
| | | | | | | Specific surface area (m²/g) | Proportion of Bi (mol %) | Kind of Bi compound | Value of the Lattice strain (η) (×10⁻³) |
| Ex. 52 | $Li_{1.08}Mn_{1.93}Al_{0.09}O_4$ | 15 | 0.3 | 950 | Oxygen | 95 | 0.24 | 0.01 | Bi-Mn compound (EPMA) | 0.284 |
| Comp. Ex. 60 | $Li_{1.08}Mn_{1.83}Al_{0.09}O_4$ | 15 | 2 | 900 | Air | 80 | 0.27 | 0.8 | $Bi_2Mn_4O_{10}$ (XRD) | 0.382 |

(Examples 53 to 56, Comparative Examples 61 to 64, Reference Examples 3 and 4: Production of lithium secondary batteries)

Lithium secondary batteries were produced in the same manner as in Examples 13 to 24 and Comparative Examples 15 to 28 except that the positive electrode active materials produced in Examples 49 to 52, Comparative Examples 57 to 60 and Reference Examples 1 and 2 were used. By using each lithium secondary battery produced, rate characteristics was evaluated. The evaluation results are shown in Table 10.

Table 10

|  | Kind of positive electrode active material | Rate characteristics (%) |
|---|---|---|
| Comparative Example 61 | Comparative Example 57 | 89 |
| Reference Example 3 | Reference Example 1 | 87 |
| Example 53 | Example 49 | 95 |
| Example 54 | Example 50 | 97 |
| Comparative Example 62 | Comparative Example 58 | 91 |
| Comparative Example 63 | Comparative Example 59 | 88 |
| Reference Example 4 | Reference Example 2 | 89 |
| Example 55 | Example 51 | 96 |
| Example 56 | Example 52 | 98 |
| Comparative Example 64 | Comparative Example 60 | 91 |

As is clear from Table 10, when the proportion of bismuth was higher than 0.5 mol % (Comparative Examples 62 and 64), the rate characteristics was inferior irrespective of the proportion of primary particles of 5 to 20 $\mu$m in particle diameter and the specific surface area of positive electrode active material. Also, when the proportion of primary particles of 5 to 20 $\mu$m in particle diameter was lower than 70 areal % and the specific surface area of positive electrode active material was smaller than 0.1 m$^2$/g (Comparative Examples 61 and 63), the rate characteristics was inferior. Further, when the proportion of primary particles of 5 to 20 $\mu$m in particle diameter was 70 areal % or higher and the specific surface area of positive electrode active material was 0.1 to 0.5 m$^2$/g and the proportion of bismuth was 0.005 to 0.5 mol % but when the value of the lattice strain ($\eta$) was larger than 0.7x10$^{-3}$ (Reference Examples 3 and 4), the rate characteristics was inferior. Meanwhile, when the positive electrode active material of the present invention was used and the value of the lattice strain ($\eta$) was smaller than 0.7x10$^{-3}$ (Examples 53 to 56), the rate characteristics was superior.

(Examples 57 and 58: Production of positive electrode active materials)

The positive electrode active material produced in Example 49 or Example 51 was passed through a polyester-made mesh of 20 $\mu$m in average opening diameter, for reclassification. The powder which had been passed through the polyester-made mesh of 20 $\mu$m in average opening diameter, was recovered to obtain a positive electrode active material of Example 57 or Example 58.

For each positive electrode active material of Examples 49, 51, 57 and 58, there are shown, in Table 11, the chemical formula, the proportion of primary particles of 5 to 20 $\mu$m in particle diameter, the specific surface area, the proportion of Bi, the kind of Bi compound, the value of the lattice strain ($\eta$) and the proportion of single particles.

Table 11

| | Chemical formula | Properties of positive electrode active material | | | | | |
|---|---|---|---|---|---|---|---|
| | | Proportion of primary particles of 5 to 20 $\mu$m in particle diameter (areal %) | Specific surface area (m²/g) | Proportion of Bi (mol %) | Kind of Bi compound | Value of the lattice strain ($\eta$) (x10⁻³) | Proportion of single particles (areal %) |
| Example 49 | $Li_{1.1}Mn_{1.9}O_4$ | 80 | 0.24 | 0.01 | Bi-Mn compound (EPMA) | 0.622 | 30 |
| Example 57 | $Li_{1.1}Mn_{1.9}O_4$ | 80 | 0.25 | 0.01 | Bi-Mn compound (EPMA) | 0.622 | 40 |
| Example 51 | $Li_{1.08}Mn_{1.83}Al_{0.09}O_4$ | 80 | 0.28 | 0.01 | Bi-Mn compound (EPMA) | 0.656 | 30 |
| Example 58 | $Li_{1.08}Mn_{1.83}Al_{0.09}O_4$ | 80 | 0.29 | 0.01 | Bi-Mn compound (EPMA) | 0.656 | 40 |

(Examples 59 and 60: Production of lithium secondary batteries)

Lithium secondary batteries were produced in the same manner as in Examples 13 to 24 and Comparative Examples 15 to 28 except that the positive electrode active materials produced in Examples 49, 51, 57 and 58 were used. Each lithium secondary battery produced was evaluated for rate characteristics. The evaluation results are shown in Table 12.
Table 12

| | Kind of positive electrode active material | Rate characteristics (%) |
|---|---|---|
| Example 53 | Example 49 | 95 |
| Example 59 | Example 57 | 97 |
| Example 55 | Example 51 | 96 |
| Example 60 | Example 58 | 98 |

As is appreciated from Table 12, rate characteristics was particularly superior in the cases (Examples 59 and 60) where the proportion of single particles was 40 areal % or more.

Industrial Applicability

The positive electrode active material of the present invention is usable for production of a lithium secondary battery superior in cycle characteristics at high temperatures. Therefore, its use in batteries for driving of hybrid electric vehicles, electric apparatuses, communication apparatuses, etc. can be expected.

Description of Reference Numerals

1: primary particle, 2: particle boundary part, 3: crystal face, 4: battery case, 5: insulation gasket, 6: separator, 7: core, 8: bismuth compound, 10, 20, 30: secondary particle, 11: lithium secondary battery, 12: positive electrode plate, 13: negative electrode plate, 14: positive electrode layer, 15: positive electrode collector, 16: negative electrode layer, 17: negative electrode collector, 18: positive electrode side container, 19: negative electrode side container, 21: electrode body, 22: tab for positive electrode, 23: a tab for negative electrode, 31 to 38: crystal grain, 40: single particle, 41 to 43: fine particle, 50a to 50 g: adhesion part (a particle boundary part)

**Claims**

1.  A positive electrode active material having a specific surface area of 0. 1 to 0. 5 $m^2$/g, which contains a large number of crystal grains containing
    primary particles of 5 to 20 $\mu$m in particle diameter, composed of lithium manganate of spinel structure containing lithium and manganese as the constituent elements, and
    a bismuth compound containing bismuth,
    wherein the proportion of the primary particles contained in the large number of crystal grains is 70 areal % or more and the proportion of the bismuth contained in the bismuth compound is 0.005 to 0.5 mol % relative to the manganese contained in the lithium manganate.

2.  The positive electrode active material according to Claim 1, wherein the value of a lattice strain ($\eta$) in powder X-ray diffraction pattern is $0.7 \times 10^{-3}$ or less.

3.  The positive electrode active material according to Claim 1 or 2, wherein the bismuth compound is a compound of bismuth and manganese.

4.  The positive electrode active material according to claim 3, wherein the compound of bismuth and manganese is $Bi_2Mn_4O_{10}$.

5.  The positive electrode active material according to any one of claims 1 to 4, wherein the large number of crystal grains contain single particles by 40 areal % or more.

6.  The positive electrode active material according to any one of claims 1 to 5, wherein the large number of crystal grains further contain secondary particles formed by mutual connection of a plurality of the primary particles.

7.  The positive electrode active material according to any one of claims 1 to 6, wherein the bismuth compound is present on at least either of the surfaces of the primary particles or the particle boundary parts where a plurality of the primary particles are connected to each other.

8.  A lithium secondary battery which has an electrode body comprising a positive electrode containing a positive electrode active material according to any one of claims 1 to 7 and a negative electrode containing a negative electrode active material.

FIG.1

FIG.2

FIG.3

FIG.4

FIG.5A

FIG.5B

FIG.5C

FIG.5D

FIG.6A

FIG.6B

FIG.6C

FIG.6D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10302767 A

- WO 2001004975 A